(19) Europäisches Patentamt
European Patent Office
Office européen des brevets

(11) Veröffentlichungsnummer: **0 200 684**
**B1**

(12) **EUROPÄISCHE PATENTSCHRIFT**

(45) Veröffentlichungstag der Patentschrift: **01.08.90**

(21) Anmeldenummer: **86810189.0**

(22) Anmeldetag: **25.04.86**

(51) Int. Cl.[5]: **C 08 J 3/20,** C 08 K 5/00, C 08 K 5/17, C 08 K 5/34, C 08 L 23/02 // (C08K5/00, 5:13, 5:52)

# (54) Verfahren zum Stabilisieren von kugelförmig polymerisierten Polyolefinen.

(30) Priorität: **02.05.85 CH 1869/85**

(43) Veröffentlichungstag der Anmeldung:
**05.11.86 Patentblatt 86/45**

(45) Bekanntmachung des Hinweises auf die Patenterteilung:
**01.08.90 Patentblatt 90/31**

(84) Benannte Vertragsstaaten:
**DE FR GB IT NL SE**

(56) Entgegenhaltungen:
**DE-A-1 694 016**
**FR-A-1 425 495**
**US-A-3 275 715**
**US-A-3 962 123**

(73) Patentinhaber: **CIBA-GEIGY AG**
**Klybeckstrasse 141**
**CH-4002 Basel (CH)**

(72) Erfinder: **Pedrazzetti, Enea, Dr.**
**Oberer Rebberg 27**
**CH-4153 Reinach (CH)**
Erfinder: **Schmitter, André, Dr.**
**Rue des Alpes 7**
**F-68220 Hegenheim (FR)**
Erfinder: **Meyer, Walter Wilhelm, Dr.**
**St. Alban Rheinweg 76**
**CH-4052 Basel (CH)**

**EP 0 200 684 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die vorliegende Erfindung betrifft ein Verfahren zum Stabilisieren von kugelförmig polymerisierten Polyolefinen durch Behandeln derselben mit einer Emulsion oder Dispersion eines Stabilisators bzw. eines Stabilisatorengemisches sowie die auf diese Weise stabilisierten Polyolefine.

Für die vor kurzem entwickelten, kugelförmig polymerisierten Polyolefine, wie sie z.B. durch P. Galli, P.C. Barbé und L. Noristi in "High Yield Catalysts in Olefin Polymerization", Die Angewandte Makromolekulare Chemie *120* (1984), 73—90 (Nr. 1935) beschrieben werden, ist noch keine befriedigende Stabilisierungsmethode bekannt. Die für die Stabilisierung von Polyolefinen in Pulverform üblichen Einarbeitungsmethoden, z.B. Beimischen des Stabilisators in Pulverform und anschliessende Extrusion, sind nicht anwendbar, da sie keine genügend homogene Verteilung ermöglichen. Ein Verfahren zum Stabilisieren von kugelförmig polymerisiertem Polypropylen ist in der Japanischen Offenlegungsschrift Sho 59—150719 beschrieben. Dabei wird das kugelförmig polymerisierte Polypropylen in einem Hochgeschwindigkeitsmischer bei Temperaturen von maximal 162°C mit einem Stabilisator bzw. Stabilisatorengemisch behandelt, dessen Schmelzpunkt unter 162°C liegt. Dadurch werden die kugelförmigen Polymerteilchen mit der Stabilisatorschmelze überzogen.

Auch mit dieser Methode ergeben sich offenbar Verteilungsprobleme, denn die Resultate sind nicht ganz zufriedenstellend. Dies kan durch Zugabe von bevorzugt 3 bis 15 Gewichtsprozent eines Bindemittels, bezogen auf das Polypropylen, etwas verbessert werden.

Es wurde nun gefunden, dass die obenerwähnten kugelförmig polymerisierten Polyolefine überraschenderweise auch ohne Zugabe eines Bindemittels in sehr befriedigender Weise stabilisiert werden können, wenn sie mit einer eine geringe Menge eines Amins enthaltenden Emulsion oder Dispersion eines Stabilisators oder eines Stabilisatorengemisches behandelt werden.

Im US—Patent 3,962,123 werden stabile wässrige Dispersionen beschrieben, die ein phenolisches Antioxidans, eine Seife und eine nichtionische oder anionische grenzflächenaktive Verbindung enthalten. Diese Dispersionen eignen sich beispielsweise zum Stabilisieren von Acrylnitril-Butadien-Styrol oder Acrylnitril-Methylacrylat.

In der Japanischen Offenlegungsschrift Sho 60—63 274 werden ebenfalls wässrige Dispersionen von phenolischen Antioxidantien beschrieben.

Die vorliegende Erfindung betrifft ein Verfahren zum Stabilisieren von kugelförmig polymerisierten Polyolefinen durch Behandeln derselben mit mindestens einer Emulsion oder Dispersion, enthaltend einen Stabilisator oder ein Stabilisatorengemisch und 0,05 bis 1,0 Gewichtsprozent, bezogen auf das Polyolefin, eines Amins der Formel I

$$R_1—\underset{\displaystyle R_2}{\underset{|}{N}}—R_3 \qquad (I)$$

worin $R_1$ $C_1—C_{20}$ Alkyl, welches durch —OH substituiert sein kann, oder $C_3—C_{50}$ Alkyl, welches ein- oder mehrmals durch —O— unterbrochen ist oder $C_1—C_8$ Alkoxy bedeutet und $R_2$ und $R_3$ unabhängig voneinander Wasserstoff sind oder eine der für $R_1$ angegebenen Bedeutungen haben oder $R_2$ und $R_3$ zusammen mit dem Stickstoffatom, an dem sie gebunden sind, einen 5- bis 7-gliedrigen heterocyclischen Ring bilden.

$R_1$, $R_2$ und $R_3$ bedeuten als $C_1—C_{20}$ Alkyl beispielsweise Methyl, Ethyl, Propyl, Isopropyl, Butyl, tert.-Butyl, n-Pentyl, α-Methylpentyl, Hexyl, 2,4-Dimethylpentyl, n-Octyl, 6-Methylheptyl, 2-Ethylhexyl, Decyl, Dodecyl, Octadecyl, Octadecylethyl, Eicosyl. Bevorzugt is lineares Alkyl, insbesondere lineares $C_{12}—C_{18}$ Alkyl.

Als durch —OH substituiertes Alkyl bedeuten etwaige Substituenten bevorzugt endständig durch —OH substituiertes $C_1—C_8$ Alkyl, wie z.B. Hydroxymethyl, 2-Hydroxyethyl, 3-Hydroxypropyl, 1-Hydroxyisopropyl, 6-Hydroxyhexyl oder 8-Hydroxyoctyl. Bevorzugt ist 1-Hydroxyisopropyl und besonders bevorzugt ist 2-Hydroxyethyl.

Als durch —O— unterbrochenes Alkyl bedeuten etwaige Substituenten bevorzugt Alkyl, das mehrmals, z.B. 2 bis 20 Mal, durch —O— unterbrochen ist. Besonders bevorzugt sind Reste der Formel

$$-\!\!\left[CH_2CH_2O\right]_{\overline{n}}H \quad ,$$

worin n eine ganze Zahl zwischen 2 und 20 bedeutet.

Bilden $R_2$ und $R_3$ mit dem Stickstoffatom, an dem sie gebunden sind, einen heterocyclischen Ring, so handelt es sich dabei z.B. um Pyrazolidin-1-yl, Piperidino, Morpholino, Piperazin-1-yl, 4-Methylpiperazin-1-yl, Hexahydroazepin-1-yl, Homopiperazin-1-yl und 4-Methyl-homopiperazin-1-yl.

Bedeuten etwaige Substituenten Alkoxy, so handelt es sich z.B. um Methoxy, Ethoxy, 3-Propoxy, 4-n-Butoxy, 1-n-Octyloxy.

Bevorzugt werden flüssige Amine der Formel I. Besonders bevorzugt werden diejenigen flüssigen Amine der Formel I, worin mindestens einer der Reste $R_2$ und $R_3$ eine der oben für $R_1$ angegebenen

Bedeutungen hat. Ebenfalls bevorzugt sind jene Amine, worin $R_1$ geradkettiges $C_{12}$—$C_{18}$ Alkyl ist und mindestens einer der Reste $R_2$ und $R_3$ eine Gruppe

$$-\!\!\!\!+ CH_2CH_2O +_n H$$

bedeutet, worin n eine ganze Zahl zwischen 1 und 10 ist.

Besonders bevorzugt werden auch die flüssigen Amine der Formel I, worin $R_1$, $R_2$ und $R_3$ endständig durch —OH substituiertes $C_2$—$C_4$ Alkyl bedeuten, wie z.B. Triethanolamin.

Geeignete Amine sind z.B. Butylamin, Dibutylamin, Triethanolamin, Triisopropanolamin, N,N-Bis-(diethanol)-dodecylamin, N,N-Bis-(diethanol)-octadecylamin, 2,4,6-Trimethylpyridin, 2,3,6-Trimethylpyridin und Gemische davon und technische Amingemische, wie sie z.B. unter dem Namen ®Atmer 163 (der Firma Atlas); oder ®Armostat A 400 (der Firma Akzo) im Handel sind.

Die Emulsion bzw. Dispersion, mit der das Polyolefin behandelt wird, enthält den Stabilisator bzw. das Stabilisatorengemisch vorzugsweise in einer menge von 0,03 bis 5,0 Gew.%, insbesondere 0,1 bis 1,0 Gew.%, bezogen auf das Polyolefin.

Als Stabilisatoren kommen z.B. die folgenden in Frage:

1. Antioxidantien

1.1 *Alkylierte Monophenole*

2,6-Di-tert.butyl-4-methylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

1.2 *Alkylierte Hydrochinone*

2,6-Di-tert.butyl-4-methoxyphenol
2,5-Di-tert.butyl-hydrochinon
2,5-Di-tert.amyl-hydrochinon
2,6-Diphenyl-4-octadecyloxyphenol

1.3. *Hydroxylierte Thiodiphenylether*

2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

1.4. *Alkyliden-Bisphenole*

2,2'-Methylen-bis-(6-tert.butyl-4-methylphenol)
2,2'-Methylen-bis-(6-tert.butyl-4-ethylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)
2,2'-Ethyliden-bis-(4,6-di-tert.butylphenol)
2,2'-Ethyliden-bis-(6-tert.butyl-4-isobutylphenol)
2,2'-Methylen-bis-[6-(α-methylbenzyl)-4-nonylphenol]
2,2'-Methylen-bis-[6-(α,α-dimethylbenzyl)-4-nonylphenol]
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Bis-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercaptobutan
Ethylenglycol-bis-[3,3-bis-(3'-tert.butyl-4'-hydroxyphenyl)-butyrat]
Bis-(3-tert.butyl-4-hydroxy-5-methylphenyl)-dicyclopentadien
Bis-[2-(3'-tert.butyl-2'-hydroxy-5'-methyl-benzyl)-6-tert.butyl-4-methyl-phenyl]-terephthalat.

1.5 *Benzylverbindungen*

1,3,5-Tris-(3,5-di-tert.butyl-4-hydroxybenzyl)-2,4,6-trimethylbenzol

Bis-(3,5-di-tert.butyl-4-hydroxybenzyl)-sulfid
3,.5-di-terty.butyl-4-hydroxybenzyl-mercaptoessigsäure-isooctylester
Bis-(4-tert.butyl-3-hydroxy-2,6-dimethylbenzyl)dithiol-terephthalat
1,3,5-Tris-(3,5-di-tert.butyl-4-hydroxybenzyl)-isocyanurat
1,3,5-Tris-(4-tert.butyl-3-hydroxy-2,6-dimethylbenzyl)-isocyanurat
3,5-di-tert.butyl-4-hydroxybenzyl-phosphonsäure-dioctadecylester
Calcium-salz des 3,5-di-tert.butyl-4-hydroxybenzyl-phosphonsäuremonoethylesters.

1.6. *Acylaminophenole*
4-Hydroxy-laurinsäureanilid
4-Hydroxy-stearinsäureanilid
2,4-Bis-(octylmercapto)-6-(3,5-di-tert.butyl-4-hydroxyanilino)-s-triazin
N-(3,5-di-tert.butyl-4-hydroxyphenyl)carbaminsäureoctylester.

1.7. *Ester der β-(3,5-Di-tert.butyl-4-hydroxyphenyl)-propionsäure* mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-(hydroxyethyl)-isocyanurat |
| Thiodiethylenglycol | N,N'-Bis-(hydroxyethyl)-oxalsäurediamid |

1.8. *Ester der β-(5-tert.butyl-4-hydroxy-3-methylphenyl)propionsäure* mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-(hydroxyethyl)-isocyanurat |
| Thiodiethylenglycol | N,N'-Bis-(hydroxyethyl)-oxalsäurediamid |

1.9. *Amide der β-(3,5-Di-tert.butyl-4-hydroxyphenyl)propionsäure,* wie z.B.
N,N'-Bis-(3,5-di-tert.butyl-4-hydroxyphenylpropionyl)-hexamethylendiamin
N,N'-Bis-(3,5-di-tert.butyl-4-hydroxyphenylpropionyl)-trimethylendiamin
N,N'-Bis-(3,5-di-tert.butyl-4-hydroxyphenylpropionyl)-hydrazin

2. UV-Absorber und Lichtschutzmittel

2.1 *2-(2'-Hydroxyphenyl)benztriazole,* wie z.B. das 5'-Methyl-, 3',5'-Di-tert.butyl-, 5'-Tert.butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy, 3',5'-Di-tert.amyl-, 3',5'-Bis(α,α-dimethylbenzyl)-Derivat.

2.2. *2-Hydroxybenzophenone,* wie z.B. das 4-Hydroxy-, 4-Methoxy, 4-Octoxy-, 4-Decyloxy-, 4-Dodecyloxy-, 4-Benzyloxy-, 4,2',4'-Trihydroxy-, 2'-Hydroxy,4,4'-dimethoxy-Derivat.

2.3. *Ester von gegebenenfalls substituierten Benzoesäuren,* wie z.B. 4-Tert. butyl-phenylsalicylat, Phenylsalicylat, Octylphenylsalicylat, Dibenzoylresorcin, Bis-(4-tert.butylbenzoyl)-resorcin, Benzoylresorcin, 3,5-tert.butyl-4-hydroxybenzoesäure-2,4,di-tert.-butylphenylester, 3,5-Di-tert.butyl-4-hydroxybenzoesäurehexadecylester.

2.4 *Acrylate,* wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. *Nickelverbindungen,* wie. z.B. Nickelkomplexe des 2,2'-Thio-bis-[4-(1,1,3,3-tetramethylbutyl)-phenols], wie der 1:1- oder der 1:2-Komplex, gegebenfalls mit zusätzlichen Liganden wie n-Butylamin, Triethanolamin oder N-Cyclohexyl-diethanolamin, Nickeldibutyldithiocarbamat, Nickelsalze von 4-Hydroxy-3,5-di-tert.butylbenzylphophonsäure-monoalkylestern wie vom Methyl- oder Ethylester, Nickelkomplexe von Ketoximen wie von 2-Hydroxy-4-methyl-phenyl-undecylketonixim, Nickelkomplexe des 1-Pheny-4-lauroyl-5-hydroxy-pyrazols, gegebenenfalls mit zusätzlichen Liganden.

2.6 *Sterisch gehinderte Amine,* wie z.B. Bis-(2,2,6,6-tetramethylpiperidyl)-sebacat
Bis-(1,2,2,6,6-pentamethypiperidyl)-sebacat
n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon).

2.7. *Oxalsäurediamide,* wie z.B. 4,4'-Di-octyloxy-oxanilid, 2,2'-Dioctyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von ortho- und para-Methoxy- sowie von o- und p-Ethoxy-disubstituierte Oxaniliden.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearylpentaerythritdiphospit, Tris-(2,4-di-tert.butylphenyl)phosphit, Diisodecylpentaerythrit-diphosphit, Bis-2,4-di-tert.butylphenyl)pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.

5. Peroxidzerstörende Verbindungen, wie z.B. Ester der β-Thio-dipropionsäure, beispielswise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Basische Co-Stabilisatoren, wie z.B. Melamin, Polyvinylpyrrolidon, Dicyandiamid, Triallylcyanurat, Harnstoff-Derivate, Hyrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

Als Stabilisatoren kommen insbesondere Antioxidantien in Betracht, vorzugsweise aus der Gruppe der gehinderten Phenole, vor allem Ester der β-(3,5-Di-tert.-butyl-4-hydroxyphenyl)-propionsäure, wovon einige unter Punkt 1.7. aufgezählt sind.

Von besonderem Intetesse sind Gemische von Estern, wie sie unter Punkt 1.7. beschrieben sind. Gemische aus einem dieser Ester, der unter dem Siedebereich des Wassers schmilzt und einem Ester der gleichen Gruppe, der aber einen Schmelzpunkt über dem Siedebereich des Wassers aufweist, sind bevorzugt.

Besonders bevorzugt werden die obenerwähnten Gemische, die zusätzlich einen Phosphitstabilisator enthalten. Beispiele für letztere sind in Punkt 4 aufgezählt.

Ganz besonders bevorzugt wird de Einsatz einer Kombination der folgenden drei Verbindungen:

— Pentaerythrityl-tetrakis-[3-(3,5-di-tert.-butyl-4-hydroxyphenyl)-propionat]
— Octadecyl-3-(3,5-di-tert.-butyl-4-hydroxyphenyl)-propionat
— Tris-(2,4-di-tert.-butylphenyl)-phosphit.

Diese Verbindungen können entweder zusammen inn derselben Emulsion bzw. Dispersion oder auch bevorzugt in verschiedenen Emulsionen (Dispersionen), die gleichzeitig oder vorzugsweise nacheinander aufgetragen werden, enthalten sein.

Stabilisatoren bzw. Stabilisatorengemische, die unter dem Siedebereich des Wassers schmelzen, werden zweckmässig zusammen mit dem Amin der Formel I emulgiert und die zu stabilisierenden Polyolefine mit der so erhaltenen Emulsion behandelt. Stabilisatoren bzw. Stabilisatorengemische mit einem Schmelzpunkt über dem Siedebereich des Wassers werden hingegen dispergiert und die Polyolefine mit der entsprechenden Dispersion behandelt.

Verschiedene Stabilisatoren können auch in verschiedenen Emulsionen bzw. Dispersionen eingearbeitet werden, die dann gleichzeitig oder nacheinander auf das Polyolefin aufgetragen werden. Insbesondere bei Verwendung von Phosphiten empfiehlt sich der Einisatz einer getrennten Dispersion (bzw. Emulsion).

Bei den erfindungsgemässen Emulsionen bzw. Dispersionen handelt es sich vorzugsweise um wässrige Systeme, die auch noch mit Wasser mischbare organische Lösungsmittel enthalten können, wie z.B. Ketone, insbesondere Aceton.

Die Stabilisatoremulsion bzw. -dispersion wird beispielsweise wie folgt hergestellt:

Die zu emulgierenden bzw. dispergierenden Stabilisatoren werden zusammen mit dem Amin der Formel I und mit einem üblichen, vorzugsweise nichtionogenen Emulgator bzw. Emulgatorengemisch zu einer homogenen Schmelze verarbeitet. (Handelt es sich um Stabilisatoren, die über dem Siedebereich des Wassers schmelzen, so wird danach das Gemisch auf eine Temperatur unter dem Siedebereich des Wassers abgekühlt.) Dann wird bei einer Temperatur, die unter dem Siedebereich des Wassers gehalten werden muss, unter heftigem Rühren mittels eines Schnellrührers zunächst ein Teil, vorzugsweise z.B. 1/3 bis 1/2, der Gesamtwassermenge zugegeben. Das restliche Wasser wird anschliessend, gegebenenfalls unter Zugabe einer kleineren Menge eines organischen Lösungsmittels, wie z.B. Aceton, unter langsamerem Rühren zugefügt.

Die zu dispergierenden Stabilisatoren können beispielsweise auch in Form von feinem Pulver zusammen mit dem Amin und dem Emulgator vorgelegt werden. Anschliessend wird ein Teil, z.B. 1/3 bis 1/2, der Gesamatwassermenge unter heftigem Rühren zugegeben. (Gegebenenfalls kann dieses Gemisch gemahlen werden, um die Partikelgrösse des Festkörpers noch weiter zu reduzieren.) Dann wird unter normalem Rühren die restliche Menge Wasser zugegeben.

Der Gehalt an zu emulgierender (bzw. dispergierender) Substanz (Stabilisatoren + Amin) beträgt beispielsweise 3 bis 50, vorzugsweise 5 bis 25 Gewichtsprozent, bezogen auf die gesamte Emulsion bzw. Dispersion.

Der Emulgator bzw. das Emulgatorengemisch wird beispielsweise in einer Menge von 5 bis 50, bevorzugt 10 bis 35 Gewichtsprozent, bezogen auf die zu emulgierende (bzw. dispergierende) Substanz (Stabilisatoren + Amin) eingesetzt.

Geeignete Emulgatoren (bzw. Dispergatoren) sind alle üblichen Emulgatoren, wie sie z.B. in Ullmanns Encyclopädie der technischen Chemie (3. Auflage, 1955), 6. Band, S.S. 504—505 beschrieben sind. Bevorzugt werden nichtionogene Emulgatoren, wie z.B. Nonylphenoxypoly-(ethylenoxy)-ethanol, Polyoxyethylen(20)sorbitanmonooleat oder Sorbitanmonooleat.

Alle kugelförmig polymerisierten Polyolefine, wie z.B. Polyethylen, Polypropylen, Ethylen-Propylen-Copolymere, die durch Polymerisation mit sogenannten Katalysatoren der dritten Generation (wie sie. z.B. in der obengenannten Publikation von P. Galli, P.C. Barbé und L. Noristi beschrieben sind) erhalten werden, können vorteilhaft mit dem erfindungsgemässen Verfahrenn stabilisiert werden. Bevorzugt werden Polypropylen und Copolymere des Propylens.

Die folgenden Beispiele erläutern die Erfindung, ohne sie einzuschränken.

Beispiele 1 bis 4

a) Herstellung der Emulsionen (Dispersionen)

1.) 2 g Pentaerythrityl-tetrakis-[3-(3,5-di-tert.-butyl-4-hydroxyphenyl)-propionat] und 2 g des unter dem Namen ®Atmer 163 (der Firma Atlas) erhältlichen technischen Fettalkyl-diethanolamins werden zusammen mit 1,35 g eines Emulgatoremisches bestehend aus 20% Sorbitanmonooleat und 80% Polyoxyethylen(20)sorbitanmonooleat bei 160°C aufgeschmolzen. Nach dem Abkühlen auf 97°C werden unter kräftigem Rühren 20 ml Wasser zugegeben. Danach wird eine Lösung von 5 ml Aceton in 20 ml Wasser zugegeben und bei normaler Geschwindigkeit weitergerührt *(Dispersion 1).*

2.) 2,0 g Pentaerythrityl-tetrakis-[3-(3,5-di-tert.-butyl-4-hydroxyphenyl)propionat] und 2,0 g des unter dem Namen ®Armostat A 400 (der Firma Atlas) erhältlichen technischen Fettalkyl-diethanolamins werden mit 1,10 g eines Emulgatormeisches bestehend aus 20% Sorbitanmonooleat und 80% Polyoxyethylen(20)sorbitanmonooleat auf 130°C erwärmet. Dabei geht die Festsubstanz in Lösung. Nach dem Abkühlen auf 94°C werden unter heftigem Rühren 10 ml Wasser zugegeben. Anschliessend wird eine Lösung von 2 ml Aceton in 10 ml Wasser zugegeben und bei normaler Geschwindigkeit weitergerührt *(Dispersion 2).*

3.) 4,0 g Pentaerythrityl-tetrakis-[3-(3,5-di-tert.-butyl-4-hydroxyphenyl)propionat] und 4,0 g Treithanolamin werden mit 2,0 g eines Emulgatorgemisches bestehend aus 20% Sorbitanmonooleat und 80% Polyoxyethylen(20)sorbitanmonooleat in einem Becherglas auf 85°C erwärmt und anschliessend auf 50°C abgekühlt. Danach werden unter heftigem Rühren 20 ml Wasser und 9 ml Aceton hinzugefügt. Weitere 20 ml Wasser werden anschliessend unter langsamerem Rühren zugegeben *(Dispersion 3).*

4.) 5,0 ag Octadecyl-3-(3,5-di-tert.-butyl-4-hydroxyphenyl)-propionat und 5,0 g des unter dem Namen ®Armostat A 400 (der Firma Akzo) erhältlichen technischen Fettalkyl-diethanolamins werden mit 1,7 g eines Emulgatorgemishces bestehend aus 20% Sorbitanmonooleat und 80% Polyoxyethylen(20)sorbitanmonooleat auf 70°C erwärmt. Es werden 40 ml Wasser unter heftigem Rühren mittels eines Schnellrührers zugegeben, wobei die Temperatur auf 50°C gehalten wird. Anschliessend werden noch 40 ml Wasser und 9 ml Aceton unter langsamerem Rühren zugegeben *(Emulsion 4).*

b) Ofenalterungstest

In einem 5 Liter-Behälter mit Druckausgleich werden 1000 g Kugelform-Polypropylen (®Spheripol der Firma Himont, MFI 9—10) vorgelegt und jeweils mit der in der untenstehenden Tabelle 1 angegebenen Dispersion bzw. Emulsion versetzt. Das Gemisch wird durch Schütteln mittels eines Taumelmischers etwa 45 Minuten lang behandelt. Das Kugelform-Polypropylen wird dann im Ofen bei 120, 135 und 149°C gealtert. Als Kriterium für die Stabilisierung gilt die Ofenalterungszeit in Stunden bis zum Zerfall der Kugeln unter mechanischer Belastung.

Die Ergebnisse sind in Tabelle 1 wiedergegeben.

Tabelle 1

| Beispiel | Dispersion/ Emulsion | Ofenalterungszeit in Stunden bei 120°C | 135°C | 149°C |
|---|---|---|---|---|
| 1 | 1 | 2952 | 1848 | 528 |
| 2 | 2 | 2952 | 1440 | 480 |
| 3 | 3 | 1152 | 912 | 216 |
| 4 | 4 | > 900 | 864 | 120 |
| unbehandeltes Kugelform-Polypropylen | | 12 | 5 | 2 |

Beispiel 5

a) Herstellung der Dispersionen

Dispersion A

50 g Tris-(2,4-di-tert.butylphenyl)-phosphit und 100 g des unter dem Namen ®Armostat A 400 (der Firma Akzo) erhältlichen technischen Fettalkyl-diethanolamins werden mit 33 g eines Emulgatorgemisches bestehend aus 20% Sorbitanmonooleat und 80% Polyoxyethylen(20)sorbitanmonooleat erwärmt. Bei 160°C wird eine klare, hellgelbe Lösung erhalten, die auf 98°C abgekühlt wird. Es werden unter heftigem Rühren 700 ml Wasser zugegeben. Danach wird etwa 15 Minuten lang weitergerührt. Alsdann werden noch 120 ml Wasser zugegeben und es wird noch 15 Minuten langsam gerührt. Die Dispersion kann sich nach längerer Lagerung scheiden, wird aber durch Rühren wieder vollständig homogenisiert.

Emulsion B

40 g Pentaerythrityl-tetrakis-[3-(3,5-di-tert.-butyl-4-hydroxyphenyl)-propionat], 40 g Octadecyl-3-(3,5-di-tert.-butyl-4-hydroxyphenyl)-propionat und 10 g Nonylphenoxypoly-(ethylenoxy)-ethanol werden bei 110°C geschmolzen. Man lässt auf 90°C abkühlen und gibt unter hertigem Rührenn 60 ml Wasser zu. Dabei fällt die Temperatur auf 70°C. Die weisse Emulsion wird auf einmal zu 250 ml kaltem Wasser gegeben und etwa 15 Minuten langsam weitergerührt.

b) Ofenalterungstest

In einem 5 Liter-Behälter mit Druckausgleich werden 1000 g Kugelform-Polypropylen zunächst mit 10 ml der Dispersion A 20 Minuten im Taumelmischer behandelt. Anschliessend werden 10 ml der Emulsion B zugegeben und wiederum 20 Minuten gemischt. Danach wird der Ofenalterungstest, wie unter den Beispielen 1 bis 4 beschrieben, ausgeführt. Die Resultate sind in der nachfolgenden Tabelle 2 wiedergegeben.

Tabelle 2

| Beispiel | Dispersion | Ofenalterungszeit in Stunden bei 120°C | 135°C | 149°C |
|---|---|---|---|---|
| 5 | A + B | > 1800 | 1728 | 576 |
| unbehandeltes Kugelform-Polypropylen | | 12 | 5 | 2 |

Beispiel 6

a) Herstellung der Dispersionen
Dispersion C

10 g Pentaerythrityl-tetrakis-[3-(3,5-di-tert.-butyl-4-hydroxyphenyl)-propionat] und 10 g Octadecyl-3-(3,5-di-tert.-butyl-4-hydroxyphenyl)propionat werden zusammen mit 1,25 g Nonylphenoxypoly-(ethylenoxy)-ethanol bei 120°C aufgeschmolzen. Nach dem Abkühlen auf 75°C werden unter kräftigem Rühren zunächst 30 ml Wasser und dan weitere 49,3 ml Wasser zugegeben.

Dispersion D

5 g Tris-(2,4-di-tert.-butylphenyl)phosphit in Pulverform und 2,5 g des unter dem Namen ® Armastat A 400 (der Firma Akzo) erhältlichen technischen Fettalkyl-diethanolamins werden mit 1 g Nonylphenoxypoly-(ethylenoxy)-ethanol bei Raumtemperatur gerührt. Anschliessend werden in 3 Etappen 91,5 g Wasser zugegeben.

b) Ofenalterungstest

In eine 5-Liter-Glasflasche werden 1000 g Kugelform-Polypropylen eingewogen. Anschliessend werden 20 ml der Dispersion D über die Polypropylenkugeln gegossen. Die Glasflasche wird auf einem Rührwerk befestigt, das 5 Minuten läuft. Dann werden 5 ml der Dispersion C mit 10 ml Wasser verdünnt und über die Polypropylenkugeln gegossen. Das Rührwerk wird für weitere 20 Minuten angestellt. Danach werden die Polypropylenkugeln in eine Glasschale gefüllt und im Umluftofen bei 149°C gealtert. Als Kriterium für die Stabilisierung gilt die Ofenalterungszeit in Stunden bis zum Zerfall der Kugeln unter dem Druck eines Fingernagels.

Die Ergebnisse sind in Tabelle 3 wiedergegeben.

Tabelle 3

| Beispiel | Dispersion | Ofenalterungszeit in Stunden bei 149°C |
|---|---|---|
| 6 | C + D | 744 |
| unbehandeltes Kugelform-Polypropylen | | 2 |

**Patentansprüche**

1. Verfahren zum Stabilisieren von kugelförmig polymerisierten Polyolefinen durch Behandeln derselben mit mindestens einer Emulsion oder Dispersion, enthaltend einen Stabilisator oder ein Stabilisatorengemisch und 0,05 bis 1,0 Gewichtsprozent, bezogen auf das Polyolefin, eines Amins der Formel I

$$R_1—\underset{\displaystyle R_2}{\underset{|}{N}}—R_3 \qquad (I)$$

worin $R_1$ $C_1$—$C_{20}$ Alkyl, durch —OH substituiertes $C_1$—$C_{20}$ Alkyl, $C_3$—$C_{50}$ Alkyl, welches ein- oder mehrmals durch —O— unterbrochen ist oder $C_1$—$C_8$ Alkoxy bedeutet und $R_2$ und $R_3$ unabhängig voneinander Wassersoff sind oder eine der für $R_1$ angegebenen Bedeutungen haben oder $R_2$ und $R_3$ zusammen mit dem Stickstoffatom, an dem sie gebunden sind, einen 5- bis 7-gliedrigen heterocyclischen Ring bilden.

2. Verfahren gemäss Anspruch 1, dadurch gekennzeichnet, dass das Amin der Formel I ein flüssiges Amin ist.

3. Verfahren gemäss Anspruch 1, dadurch gekennzeichnet, dass das Amin der Formel I ist, worin mindestens einer der Reste $R_2$ und $R_3$ eine der im Anspruch 1 für $R_1$ angegebenen Bedeutungen hat.

4. Verfahren gemäss Anspruch 1, dadurch gekennzeichnet, dass das Amin der Formel I ist, worin $R_1$ geradkettiges $C_{12}$—$C_{18}$ Alkyl ist und mindestens einer der Reste $R_2$ und $R_3$ eine Gruppe

$$-\!\!\left[CH_2CH_2O\right]_n\!\!-H$$

bedeutet, worin n eine ganze Zahl zwischen 1 und 10 ist.

5. Verfahren gemäss Anspruch 1, dadurch gekennzeichnet, dass das Amin ein flüssiges Amin der Formel I ist, worin $R_1$, $R_2$ und $R_3$ endständig durch —OH substituiertes $C_2$—$C_4$ alkyl bedeuten.

6. Verfahren gemäss Anspruch 1, dadurch gekennzeichnet, dass die Emulsion oder Dispersion den Stabilisator oder das Stabilisatorengemisch in einer Menge von 0,03 bis 5,0 Gewichtsprozent, bezogen auf das Polyolefin, enthält.

7. Verfahren gemäss Anspruch 1, dadurch gekennzeichnet, dass als Stabilisatoren Este der β-(3,5-di-tert.-butyl-4-hydroxyphenyl)-propionsäure einesetzt werden.

8. Verfahren gemäss Anspruch 7, dadurch gekennzeichnet, dass zusätzlich ein Phosphit als Stabilisator eingesetzt wird.

9. Verfahren gemäss Anspruch 1, dadurch gekennzeichnet, dass als Stabilisatoren
— Pentaerythrityl-tetrakis-[3-(3,5-di-tert.-butyl-4-hydroxyphenyl)-propionat]
— Octadecyl-3-(3,5-di-tert.-butyl-4-hydroxyphenyl)propionat
— Tris-(2,4-di-tert.-butylphenyl)-phosphit
zusammen eiungesetzt werden.

10. Das gemäss Anspruch 1 stabilisierte Polyolefin.

**Revendications**

1. Procédé pour stabiliser des polyoléfines polymérisées en billes selon lequel on traite celles-ci par au moins une émulsion ou dispersion contenant un stabilisant, ou un mélange de stabilisants, et de 0,05 à 1,0% en poids, par rapport à polyoléfine, d'une amine répondant à la formule I:

$$R_1—\underset{\displaystyle R_2}{\underset{|}{N}}—R_3 \qquad (I)$$

dans laquelle $R_1$ représente un alkyle en $C_1$—$C_{20}$, éventuellement porteur d'un —OH, un alkyle en $C_3$—$C_{50}$, éventuellement interrompu une ou plusieurs fois par —O—, ou un alcoxy en $C_1$—$C_8$, et $R_2$ et $R_3$ représentent chacun, indépendamment l'un de l'autre, l'hydrogène ou l'un des radicaux qui ont été définis ci-dessus pour $R_1$, ou forment ensemble, et avec l'atome d'azote auquel ils son liés, un hétérocycle contenant de 5 à 7 maillons.

2. Procédé selon la revendication 1 caractérisé en ce que l'amine de formule I est une amine liquide.

3. Procédé selon la revendication 1 caractérisé en ce que l'amine est une amine liquide de formule I dans laquelle au moins l'un des symboles $R_2$ et $R_3$ a l'une des significations indiquées pour $R_1$ à la revendication 1.

4. Procédé selon la revendication 1 caractérisé en ce que l'amine est une amine liquide de formule I dans laquelle $R_1$ représente un alkyle linéaire en $C_{12}$—$C_{18}$,. et au moins l'un des symboles $R_2$ et $R_3$ représente un radical:

$$-\!\!\left[CH_2CH_2O\right]_n\!\!-H$$

dans lequel n désigne un nombre entier compris entre 1 et 10.

5. Procédé selon la revendication 1 caractérisé en ce que l'amine est une amine liquide de formule I dans laquelle $R_1$, $R_2$ et $R_3$ représentent chacun un alkyle en $C_2$—$C_4$ qui porte un radical —OH terminal.

6. Procédé selon la revendication 1 caractérisé en ce que l'émulsion ou la dispersion contient le stabilisant, ou le mélange de stabilisants, en une quantité de 0,03 à 5,0% en poids par rapport à la polyoléfine.

7. Procédé selon la revendication 1 caractérisé en ce qu'on utilise, comme stabilisants, des esters de l'acide (di-tert-butyl-3,5 hydroxy-4 phényl)-3 propionique.

8. Procédé selon la revendication 7 caractérisé en ce qu'on utilise en outre un phosphite comme stabilisant.

9. Procédé selon la revendication 1 caractérisé en ce qu'on utilise ensemble:
— du tétrakis[(di-tert-butyl-3,5 hydroxy-4 phényl)-3 propionate] du pentaérythritol,
— du (di-tert-butyl-3,5 hydroxy-4 phényl)-3 propionate d'octadécyle et
— du phosphite de tris-(di-tert-butyl-2,4 phényle)
comme stabilisants.

10. Polyoléfines qui ont été stabilisées selon la revendication 1.

**Claims**

1. A process for the stabilisation of a spherically polymerised polyolefin by treating said polyolefin with at least one emulsion or dispersion containing a stabiliser or a mixture of stabilisers and 0.05 to 1.0 per cent by weight, based on the polyolefin, of an amine of formula I

$$R_1—\underset{\displaystyle R_2}{\underset{|}{N}}—R_3 \qquad (I)$$

in which $R_1$ is $C_1$—$C_{20}$alkyl or $C_1$—$C_{20}$alkyl which is substituted by —OH, or is $C_3$—$C_{50}$alkyl which is interrupted by one or more oxygen atoms, or is $C_1$—$C_8$alkoxy, and each of $R_2$ and $R_3$ independently of the other is hydrogen or has one of the meanings indicated for $R_1$, or $R_2$ and $R_3$, together with the nitrogen atom to which they are attached, form a 5- to 7-membered heterocyclic ring.

2. A process according to claim 1, wherein the amine of formula I is a liquid amine.

3. A process according to claim 1, wherein the amine is a liquid amine of formula I in which at least one of the radicals $R_2$ and $R_3$ has one of the meanings indicated for $R_1$ in claim 1.

4. A process according to claim 1, wherein the amine is a liquid amine of formula I in which $R_1$ is straight-chain $C_{12}$—$C_{18}$alkyl and at least one of the radicals $R_2$ annd $R_3$ is a group

$$-\!\!\left[ CH_2CH_2O \right]_n\!\!- H$$

in which n is an integer between 1 and 10.

5. A process according to claim 1, wherein the amine is a liquid amine of formula I in which $R_1$, $R_2$ and $R_3$ are $C_2$—$C_4$alkyl which is substituted terminally by —OH.

6. A process according to claim 1, wherein the emulsion or dispersion contains the stabiliser or the mixture of stabilisers in an amount of 0.03 to 5.0 per cent by weight, based on the polyolefin.

7. A process according to claim 1, wherein esters of β-(3,5-di-tert-butyl-4-hydroxyphenyl)propionic acid are employed as stabilisers.

8. A process according to claim 7, wherein a phosphite is additionally employed as stabiliser.

9. A process according to claim 1, wherein
— pentaerythrityl tetrakis[3-(3,5-di-tert-butyl-4-hydroxyphenyl)-propionate]
— octadecyl 3-(3,5-di-tert-butyl-4-hydroxyphenyl)propionate
— tris(2,4-di-tert-butylphenyl) phospite
are employed together as stabilisers.

10. A polyolefin which has been stabilised according to claim 1.